# EUROPEAN PATENT APPLICATION

(11) **EP 4 759 701 A1**
(43) Date of publication of application: **17.06.2026**
(21) Application number: 23948594.9
(22) Date of filing: 18.10.2023
(51) Int. Cl.: B63H 21/38, H02K 9/19, H02K 1/20, B63H 5/125

(54) **POD DRIVE**

(30) Priority: 08.08.2023 KR 20230103648
(71) Applicant: HD Hyundai Electric Co., Ltd, Seongnam-si 13553 (KR)
(72) Inventor: JUN, Jin-Tae, Seongnam-si Gyeonggi-do 13553 (KR); MATUS, Istvan, Seongnam-si Gyeonggi-do 13553 (KR); LAJKO, Bence, Seongnam-si Gyeonggi-do 13553 (KR)
(74) Representative: Nederlandsch Octrooibureau
(86) International application number: PCT/KR2023/016180
(87) International publication number: WO 2025/033601

(57) **Abstract**

The present invention relates to a pod drive that can improve the cooling performance of a built-in motor. An embodiment comprises a motor that is disposed inside a pod and provided with a stator and a rotor in order to provide rotational force to a drive shaft. The stator includes: a stator core that is fixed inside the pod and surrounds the drive shaft; a coil that is wound around the stator core; a plurality of stator channels through which a refrigerant flows and which are arranged along the axial direction of the stator core and extend in a circumferential direction inside the stator core; and a plurality of stator guides which extend radially and are arranged, spaced a certain distance from each other along the circumferential direction of the stator, in each of the stator channels. At least some of the plurality of stator guides may include a curved portion formed by curving radial outer ends.

## Description

### Technical Field

The present disclosure relates to a pod driving device capable of improving the cooling performance of an embedded motor.

### Background Art

Pod driving devices are used, for example, as a means of propulsion in vessels and are located underwater, outside the hull and below the waterline. A pod driving device includes a motor installed within a pod. The pod is mounted on a lower portion of the hull via a support portion, and an output shaft of a motor is connected to one or two propellers and the motor drives the propellers.

The pod driving device using a motor may generate a significant amount of heat. The heat of the motor has to be appropriately dissipated so that the motor is maintained at a constant and acceptable temperature level during operations. Generally, the motor is in contact with the pod, and thus, most of the heat is dissipated into the seawater surrounding the pod.

However, a portion of the motor not in contact with the pod cannot be directly cooled by the seawater, resulting in reduced cooling efficiency. To address this issue, a method of providing a refrigerant, such as air or water, has been proposed. In this case, however, the lower portion of the motor experiences high flow resistance and insufficient refrigerant flow, resulting in a higher temperature than other portions of the motor. The high temperature within the motor may reduce the insulation lifespan of coils wound on a stator.

### Disclosure of Invention

### Technical Problem

An aspect of the present disclosure is to provide a pod driving device in which the cooling performance of an embedded motor is improved by enhancing the flow of a refrigerant passing through the motor.

### Solution to Problem

According to an aspect of the present disclosure, a pod driving device includes a pod installed on a vessel via a support portion and having a drive shaft driving a propeller, and a motor disposed within the pod and including a stator and a rotor to provide rotational force to the drive shaft, wherein the stator includes a stator core fixed within the pod and disposed to surround the drive shaft, a coil wound around the stator core, a plurality of stator channels arranged in an axial direction of the stator core, extending in a circumferential direction within the stator core, and allowing a refrigerant to flow therethrough, and a plurality of stator guides arranged to be spaced apart from each other by a predetermined interval in the circumferential direction of the stator core in each stator channel and extending radially, wherein at least some of the plurality of stator guides include a curved portion formed by curving a radially outer end portion.

### Advantageous Effects of Invention

According to an embodiment of the present disclosure, the pod driving device having improved cooling performance of the embedded motor can be provided by increasing the flow rate of a refrigerant flowing through the motor.

### Brief Description of Drawings

FIG. 1 is a side cross-sectional view illustrating a portion of a pod driving device according to an embodiment of the present disclosure.
FIG. 2 is a cross-sectional view taken along line A-A' of FIG. 1.
FIG. 3 is a cross-sectional view taken along line B-B' of FIG. 1.

### Best Mode for the Invention

Hereinafter, the present disclosure will be described in detail with reference to exemplary drawings. When adding reference numerals to components in each drawing, it should be noted that identical components are assigned the same reference numerals, wherever possible, even if they appear in different drawings.

In this specification, a vessel refers to various types of vessels transporting objects, such as people, animals, or objects, from a point of origin to a destination on or in water.

Furthermore, terms, such as "lower," "below," "bottom," "upper," "up and down," "forward," "rear," "front and back," "left and right," and "transverse" used in relation to direction and arrangement are defined with respect to a vessel or hull. Terms, such as "axial," "circumferential," and "radial" are defined with respect to a rotational centerline of a motor and drive shaft.

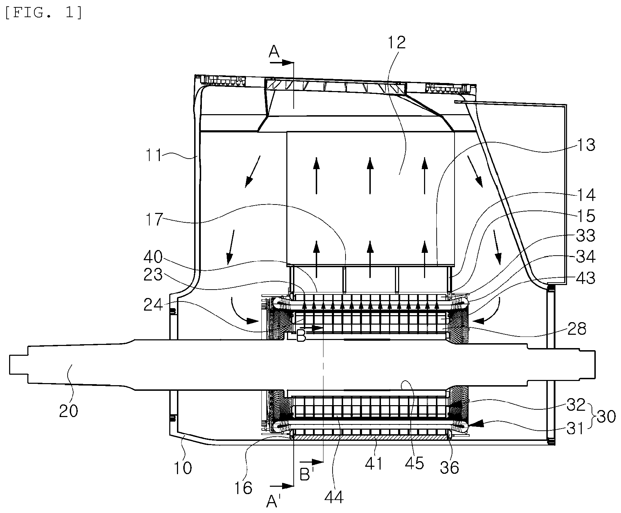

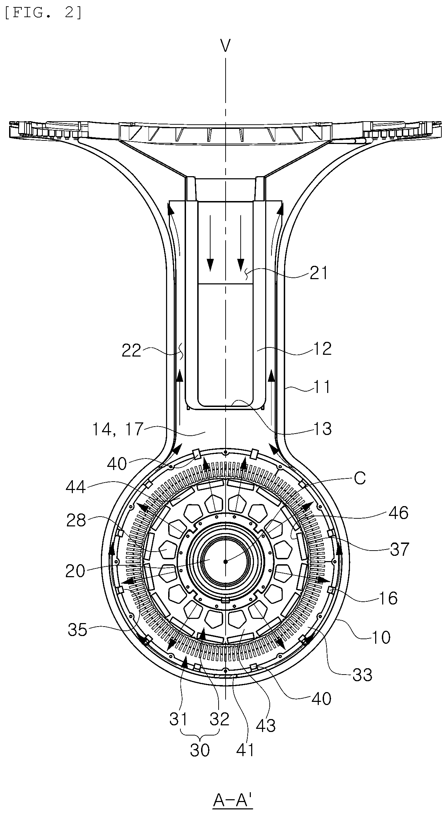

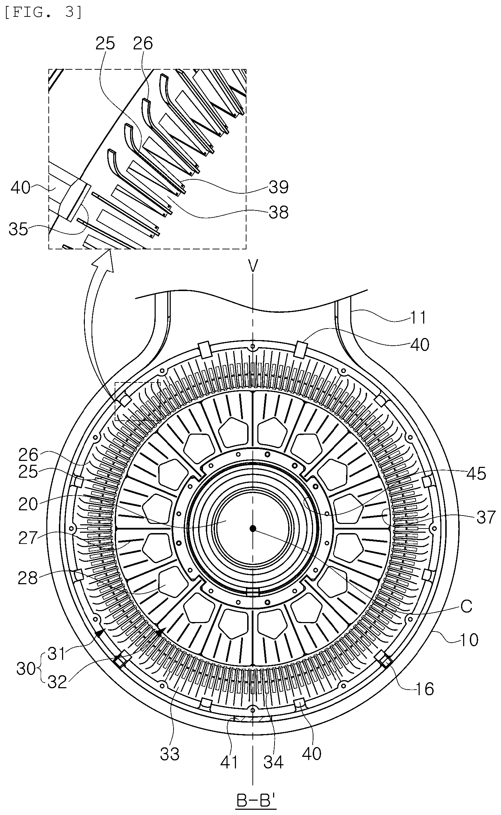

FIG. 1 is a cross-sectional side view illustrating a portion of a pod driving device according to an embodiment of the present disclosure. FIG. 2 is a cross-sectional view taken along line A-A' of FIG. 1, and FIG. 3 is a cross-sectional view taken along line B-B' of FIG. 1.

As illustrated in these drawings, a pod driving device according to an embodiment of the present disclosure may include a pod (10) and a motor (30).

The pod (10) may be formed in a roughly oval capsule shape and may be installed in a lower portion of a hull of a vessel via a support portion (11). The pod may include a drive shaft (20) driving at least one propeller (not shown). The propeller is disposed at a rear end of the pod with respect to a traveling direction of the vessel and is fixedly connected to the drive shaft so as to rotate with the drive shaft together. However, the arrangement of the propeller is not limited thereto.

For steering the vessel, the pod (10) may rotate with respect to the hull about a vertical axial line (V) via the support portion (11). Since various means for rotating the pod are already well known, a detailed description thereof will be omitted herein.

Accordingly, the pod driving device may be located underwater, outside the hull and below the waterline and may be used as a propulsion means for the vessel by driving the propeller.

Optionally, a plurality of partitions (12) may be installed within the support portion (11), may be spaced apart from each other in a width direction of the support portion, and may extend vertically along the vertical axial line (V). These partitions may be connected to each other by a connecting plate (13) extending in the width direction of the support portion at a lower portion adjacent to the motor (30). Flow paths (i.e., 21 and 22) for a refrigerant may be divided on the left, right, and center of the support portion by these partitions and may be used as passages for the refrigerant flowing to cool the motor.

Here, the refrigerant may be air, but without being limited thereto, any other gas may be used as the refrigerant, and even liquids, such as water or oil, may also be used. In addition, a pumping device (not shown), such as a compressor, a blower fan, or a pump, may be provided on the hull to facilitate refrigerant flow.

For example, a space between the plurality of partitions (12) and the connecting plate (13) may be used as an inlet passage (21) through which the refrigerant flows in. Since the space between the partitions is open to the front and rear, the refrigerant flowing through the inlet passage may flow forwardly and backwardly of the pod (10) within the support portion (11).

Furthermore, a space between the partitions (12) and an inner wall of the pod (10) may be used as an outlet passage (22) through which the refrigerant flows out. The refrigerant passing through the interior of the motor (30) may rise along the outlet passage within the support portion (11) and flow out of the support portion, while containing heat.

In addition, a support plate (14) formed to support the motor (30) may be connected to the connecting plate (13) provided within the support portion (11) at positions corresponding to the axial front and rear end portions of the motor. A support ring (15) may be provided below the support plate. The support ring may be connected to and supported on the inner wall of the pod (10) by a support block (16).

Furthermore, a reinforcing plate (17) may be further disposed between the pair of support plates (14) to supplement the rigidity of supporting the motor (30) and prevent sagging of the motor. The reinforcing plate may be installed to connect the connecting plate (13) and the motor (30).

The motor (30) is disposed within the pod (10) and coupled to the drive shaft (20) to provide rotational force to the drive shaft. The motor is used to drive the propeller and propel the vessel.

The motor (30) may include a stator (31) secured within the pod (10) and disposed to surround the drive shaft (20); and a rotor (32) rotatably coupled to the drive shaft, with a gap from the stator, within the pod. An output of the motor may be provided by the rotor smoothly and rotatably supported without friction within the stator, with a gap from the stator.

The stator (31) includes a stator core (33) secured within the pod (10) and surrounding the drive shaft (20), and a coil (34) wound around the stator core. The stator may be formed to have a generally hollow cylindrical shape, allowing the drive shaft (20) to pass therethrough, and may be fixedly supported by the support plate (14), the support ring (15), and the reinforcing plate (17) within the pod (10).

The stator core (33) may include a plurality of stator core plates formed from electrical steel plates in a predetermined shape and may be formed by axially stacking the plurality of stator core plates.

A plurality of notch portions (35) may be formed on an outer circumferential surface of each stator core plate, be spaced apart from each other at a certain angle in a circumferential direction, have a cross-section in a dovetail shape, for example, and have the same size. When stacking a plurality of stator core plates axially, these notch portions have to be aligned to communicate with each other.

When the plurality of stator core plates are stacked axially, a clamp bar (40) is inserted in the axial direction of the stator (31) into each row of the notch portions (35) that are aligned to communicate with each other, thereby coupling the plurality of stator core plates and forming the stator core (33). The clamp bar is formed as a thin and long bar, and a radially inner portion of the clamp bar is inserted into the notch portion of the stator core (33).

In addition, compression rings (36) may be disposed respectively on the exposed surfaces of the stator core plates at the front and rear ends of the stator core (33). Both end portions of the clamp bars (40) that meet the compression rings may be firmly fixed to the outer circumferential edge of the compression rings.

This fixation may be achieved, for example, by forming a plurality of notch portions, each having the same shape, size, and arrangement as those of the plurality of notch portions (35) present in each stator core (33), on the outer circumferential edge of the compression rings and inserting the end portions of the clamp bars (40) into these notch portions, respectively.

The compression ring (36) of the stator core (33) and the support ring (15) of the support plate (14) may be fixedly coupled together, for example, by shape-fitting using a stepped portion and/or bolting using a separate bracket. Accordingly, axial movement of the motor (30) and drive shaft (20) may be restrained.

In addition, at least one notch portion having the same shape, size, and arrangement as those of the plurality of notch portions (35) present in each stator core (33) may be formed on the inner circumferential surface of the support ring (15) and a lower end surface of the reinforcing plate (17), and a radially outer portion of the clamp bar (40) having a larger cross-sectional size, among the clamp bars 40, may be inserted into the notch portion, thereby securing and supporting the stator core to the support ring and reinforcing plate. Accordingly, a circumferential movement of the motor (30) and drive shaft (20) may be restrained.

With this configuration, the stator (31) and the motor (30) including the stator may be stably disposed and supported within the pod (10) by the support plate (14), the support ring (15), and the reinforcing plate (17). At this time, the stator core (33) may be substantially spaced from the inner wall of the pod by a predetermined distance.

The stator core (33) may include a rotor accommodating hole (37) formed to extend in the axial direction to accommodate the rotor (32) at the center. Furthermore, the stator core may include a plurality of slots (38) and a plurality of poles (39) formed alternately around the rotor accommodating hole.

The plurality of poles (39) may be arranged at equal intervals in the circumferential direction of the stator core (33), and the slot (38) may be formed between two adjacent poles.

The coil (34) is wound around the stator core (33) through the slots (38). The stator (31) may be formed by winding the coil in each slot (38) of the stator core.

In the stator (31), the stator core (33) may include a plurality of stator channels (23) formed at predetermined intervals in the axial direction of the stator core and extending in the circumferential direction of the stator core. Alternatively, the stator core may include a plurality of core blocks, and stator channels may be formed between two adjacent core blocks.

Each stator channel (23) may include a plurality of stator guides (25) that are arranged while being spaced apart from each other at a predetermined interval in the circumferential direction of the stator core (33) and extend radially. These stator guides may not only guide the flow of refrigerant, but also serve as spacers maintaining the gap between two adjacent core blocks.

Furthermore, at least some of the plurality of stator guides (25) may include a curved portion (26) formed by curving a radially outer end portion. The curved shape of the outer end portion may be oriented toward an upper portion of the pod (10). Furthermore, the curved shapes of the outer end portions of the plurality of stator guides may be symmetrical on the left and right of the pod with respect to the vertical axial line (V) passing through the rotational centerline (C).

In the stator channel (23), the stator guides (25) adjacent to the clamp bars (40) of the stator core (33) may have their radial lengths reduced and omit the curved portions, thereby avoiding interference with the notch portions (35).

The rotor (32) includes a rotor core (43) coupled to the drive shaft (20) within the pod (10), and a plurality of magnets (44) inserted into the rotor core. The rotor may be fixedly coupled to the outer circumferential surface of the drive shaft (20) with the drive shaft (20) penetrating therethrough and may be accommodated in the rotor accommodating hole (37) of the stator (31) to rotate about the rotational centerline (C) together with the drive shaft and propeller.

The rotor core (43) may include a plurality of rotor core plates formed from electrical steel plates into a predetermined shape, and the plurality of rotor core plates may be stacked in the axial direction to form the rotor core.

The rotor core (43) may include a shaft insertion hole 45 extending in the axial direction at the center to allow the drive shaft (20) to be inserted thereinto. Furthermore, the rotor core may include a plurality of magnet insertion holes (46) formed around the shaft insertion hole and into which magnets (44) are inserted.

For example, the rotor core (43) may be formed to have an annular shape, the drive shaft (20) may be inserted and penetrate through an inner circumferential portion of the rotor core, and a plurality of magnets (44) may be inserted and arranged on an outer circumferential portion of the rotor core.

The plurality of magnet insertion holes (46) may be formed to have the same shape and may be arranged at equal intervals along the circumferential direction of the rotor core (43) while being spaced apart from each other.

The magnets (44) may be formed to have a cross-sectional shape corresponding to the cross-sectional shape of the magnet insertion hole (46), and the plurality of magnets may also be formed to have the same shape. The rotor (32) may be formed by inserting and arranging magnets into each magnet insertion hole of the rotor core (43).

In the rotor (32), the rotor core (43) may include a plurality of rotor channels (24) formed at predetermined intervals in the axial direction and extending in the circumferential direction of the rotor core. Alternatively, the rotor core may include a plurality of core blocks, and the rotor channels may be formed between two adjacent core blocks.

Each rotor channel (24) may include a plurality of rotor guides (27) that are arranged while being spaced apart from each other at predetermined intervals in the circumferential direction of the rotor core and extend radially. These rotor guides may not only guide the flow of refrigerant, but also serve as spacers maintaining the gap between two adjacent core blocks.

The rotor channels (24) formed in the rotor core (43) are arranged and aligned to correspond to the stator channels (23) formed in the stator core (33) so that they may communicate smoothly with each other.

Furthermore, in the rotor (32), the rotor core (43) may include a plurality of through-holes (28) formed at predetermined intervals in the circumferential direction and extending in the axial direction of the rotor core. These through-holes may guide the axial flow of refrigerant. These through-holes may be individually connected to the plurality of rotor channels (24).

Accordingly, when the refrigerant is supplied to the pod (10) through the inlet passage (21) within the support portion (11), as indicated by the arrows in FIGS. 1 and 2, the refrigerant flows axially along the plurality of through-holes (28) of the rotor core (43) provided in the axial direction of the drive shaft (20) from the front and rear of the motor (30), flows radially along the rotor channels (24) formed in the rotor core, and then flows into the stator channels (23) formed in the stator core (33).

The refrigerant passes through the interior of the motor (10), absorbs heat, is discharged to the outside of the motor, rises along the outlet passage (22) within the support portion (11), and then flows out of the support portion. Due to the flow of the refrigerant, the rotor (32) and stator (31), in other words, the motor (30), may be cooled.

In this case, a vortex is generated in the flow of the refrigerant in a lower portion of the motor (30), reducing the flow rate of the refrigerant and degrading the cooling performance of the motor, and as a result, the temperature rises higher than other portions of the motor.

In the pod driving device according to an embodiment of the present disclosure, at least some of the plurality of stator guides (25) include a curved portion (26) formed by curving the radially outer end portion, and thus, the formation of vortices in the flow of the refrigerant discharged to the outside of the motor (30) may not only be prevented, but also the refrigerant is guided upwardly of the pod (10), so that the refrigerant may flow smoothly and rapidly without loss due to resistance and be discharged.

Therefore, the pod driving device according to an embodiment of the present disclosure has the advantage of improving the cooling performance of the built-in motor by increasing the flow rate of the refrigerant flowing within the motor.

Meanwhile, since the stator core (33) is spaced apart from the inner wall of the pod (10) by a predetermined distance and thus is not in contact with the pod, direct cooling by seawater may not be performed, which may reduce cooling efficiency, as described above. In particular, a temperature of a lower portion of the motor (30) may increase as compared to other portions of the motor due to low cooling efficiency, potentially forming a hot spot.

The pod driving device according to an embodiment of the present disclosure may further include at least one heat-conducting member (41) disposed between the stator core (33) and the inner wall of the pod (10) so as to contact the stator core (33) and the inner wall of the pod (10).

The heat-conducting member (41) may be formed and disposed in the shape of an elongated bar having a predetermined thickness and extending in the axial direction of the motor (30) at a lower end portion of the inner wall of the pod (10).

In the example illustrated in FIG. 1, the heat-conducting member (41) may have a length that is approximately equal to or slightly shorter than the length of the motor (30), but the present disclosure is not limited thereto.

A radially inner surface of the heat-conducting member (41) contacts the radially outer surface of the stator core (33). Accordingly, heat generated within the motor (30) is transferred from the stator (31) to the pod through the heat-conducting member, and the heat transferred to the pod may be dissipated into the seawater surrounding the pod.

As described above, according to the embodiment of the present disclosure, the effect of providing the pod driving device in which the cooling performance of the built-in motor is improved by increasing the flow rate of the refrigerant flowing within the motor may be obtained.

The above description is merely illustrative of the technical idea of the present disclosure, and various modifications and changes may be made by those skilled in the art without departing from the essential characteristics of the present disclosure.

Accordingly, the embodiments disclosed in the present disclosure and the accompanying drawings are not intended to limit the technical idea of the present disclosure but to describe the present disclosure, and the scope of the technical idea of the present disclosure is not limited by the embodiments and the accompanying drawings. The protection scope of the present disclosure should be interpreted by the following claims, and all technical ideas within the equivalent scope should be interpreted as being included in the scope of the present disclosure.

### [Industrial Applicability]

The present disclosure is useful, for example, as a propulsion device for vessels.

## Claims

1. A pod driving device comprising:
a pod installed on a vessel via a support portion and having a drive shaft driving a propeller; and
a motor disposed within the pod and including a stator and a rotor to provide rotational force to the drive shaft,
wherein the stator includes:
a stator core fixed within the pod and disposed to surround the drive shaft;
a coil wound around the stator core;
a plurality of stator channels arranged in an axial direction of the stator core, extending in a circumferential direction within the stator core, and allowing a refrigerant to flow therethrough; and
a plurality of stator guides arranged to be spaced apart from each other by a predetermined interval in the circumferential direction of the stator core in each stator channel and extending radially,
wherein at least some of the plurality of stator guides include a curved portion formed by curving a radially outer end portion.

2. The pod driving device of claim 1, wherein the curved portion has an orientation curved toward an upper portion of the pod.

3. The pod driving device of claim 2, wherein, in the plurality of stator guides, the curved portion has a shape symmetrical to the left and right of the pod.

4. The pod driving device of claim 1, wherein
the support portion includes:
a plurality of partitions arranged to be spaced apart from each other in a width direction of the support portion and extend vertically within the support portion; and
a connecting plate extending in the width direction of the support portion and connecting the plurality of partitions,
wherein a flow path of a refrigerant within the support portion is divided by the plurality of partitions.

5. The pod driving device of claim 4, wherein
a space between the plurality of partitions and the connecting plate constitutes an inlet passage through which the refrigerant flows in, and
a space between each partition and an inner wall of the pod constitutes an outlet passage through which the refrigerant flows out.

6. The pod driving device of claim 4, wherein
a support plate formed to support the motor at positions respectively corresponding to front and rear end portions of the motor in the axial direction is connected to the connecting plate,
a support ring is provided in a lower portion of the support plate and is connected to and supported on an inner wall of the pod by a support block, and
the stator core is fixedly supported by the support ring.

7. The pod driving device of claim 6, wherein a reinforcing plate is further disposed between a pair of support plates and connects the connecting plate and the motor.

8. The pod driving device of claim 1, wherein
the rotor includes:
a rotor core coupled to the drive shaft within the pod;
a plurality of magnets inserted into the rotor core; and
a plurality of rotor channels formed to extend in the circumferential direction within the rotor core and allowing a refrigerant to flow therethrough,
wherein the rotor channels are arranged and aligned to correspond to the stator channels.

9. The pod driving device of claim 8, wherein
the rotor core includes a plurality of through-holes formed to extend in the axial direction of the rotor core, and
each through-hole is connected to the plurality of rotor channels.

10. The pod driving device of claim 1, further comprising at least one heat-conducting member disposed between the stator core and an inner wall of the pod so as to contact the stator core and be connected to the inner wall of the pod.
